# EUROPEAN PATENT APPLICATION

(11) **EP 4 757 276 A1**
(43) Date of publication of application: **10.06.2026**
(21) Application number: 24847755.6
(22) Date of filing: 03.06.2024
(51) Int. Cl.: H04L 51/046

(54) **INTERACTION METHOD AND APPARATUS, COMPUTER DEVICE, AND STORAGE MEDIUM**

(30) Priority: 31.07.2023 CN 202310953831
(71) Applicant: Beijing Zitiao Network Technology Co., Ltd., Beijing 100190 (CN)
(72) Inventor: LIU, Fujia, Beijing 100028 (CN); WANG, Yifan, Beijing 100028 (CN); WANG, Xin, Beijing 100028 (CN)
(74) Representative: Grünecker Patent- und Rechtsanwälte PartG mbB
(86) International application number: PCT/CN2024/097013
(87) International publication number: WO 2025/025792

(57) **Abstract**

The present disclosure provides an interaction method and apparatus, a computer device, and a storage medium. The method comprises: displaying at least one piece of comment information corresponding to target multimedia content; in response to a first trigger operation on first comment information among the at least one piece of comment information, displaying a plurality of reaction options for reacting to the first comment information; and in response to a selection operation on a target reaction option among the plurality of reaction options, updating and displaying, at a target display position corresponding to the first comment information, a reaction result corresponding to the first comment information.

## Description

The present application claims the priority to Chinese Patent Application No. 202310953831.X, filed on July 31, 2023, the entire disclosure of which is incorporated herein by reference as portion of the present application.

### TECHNICAL FIELD

The present disclosure relates to an interaction method, an interaction apparatus, a computer device, and a storage medium.

### BACKGROUND

With the development of Internet technology, more and more users browse various multimedia content through media platforms. During the process of browsing multimedia content, users can express various comment information about the multimedia content, and when browsing the multimedia content, users can gain further insights by viewing the comment information made by other users.

### SUMMARY

Embodiments of the present disclosure provide at least an interaction method, an interaction apparatus, a computer device, and a storage medium.

**In** a first aspect, the embodiments of the present disclosure provide an interaction method at a first user side, including:
displaying at least one piece of comment information corresponding to target multimedia content;
displaying a plurality of view options for expressing opinions on a piece of first comment information, in response to a first trigger operation for the first comment information among the at least one piece of comment information;
and updating and displaying a view result corresponding to the first comment information at a target display position corresponding to the first comment information, in response to a selection operation for a target view option among the plurality of view options.

In an optional embodiment, the view result includes a first view result indicating that a first user selects the target view option;
or the view result includes a second view result indicating that the first user and second users jointly select the target view option, and indicating a total number of the second users.

In an optional embodiment, the updating and displaying the view result corresponding to the first comment information includes:
displaying the first view result in response to there being no historical view result matching the target view option in the first comment information before the first user selects the target view option;
or displaying the second view result in response to there being a historical view result matching the target view option in the first comment information before the first user selects the target view option.

In an optional embodiment, the displaying at least one piece of comment information corresponding to the target multimedia content includes:
displaying, in response to there being a piece of second comment information among the at least one piece of comment information that satisfies a view result display condition, a historical view result corresponding to the second comment information at a target display position corresponding to the second comment information.

In an optional embodiment, the first trigger operation includes a target trigger operation acting on the first comment information;
or the first trigger operation includes a trigger operation acting on a view control associated with the first comment information.

In an optional embodiment, the view control includes a like button.

In an optional embodiment, the target trigger operation includes a touch-and-hold operation, and the touch-and-hold operation refers to an operation in which a trigger duration exceeds a preset duration.

In an optional embodiment, the displaying the plurality of view options for expressing opinions on the first comment information, in response to the first trigger operation for the first comment information among the at least one piece of comment information, includes:
displaying an interaction panel in which the plurality of view options are displayed, in response to the target trigger operation acting on the first comment information.

In an optional embodiment, each view option on the interaction panel includes a view identifier and a piece of option information corresponding to the view option, and a total number of users selecting the view option.

In an optional embodiment, the displaying the plurality of view options for expressing opinions on the first comment information, in response to the first trigger operation for the first comment information among the at least one piece of comment information, includes:
displaying, in response to a trigger operation acting on a view control associated with the first comment information, the plurality of view options at a preset display position corresponding to the view control.

In an optional embodiment, each view option displayed at the preset display position corresponding to the view control includes a view identifier corresponding to the view option.

In an optional embodiment, the method further includes:
updating a total number of trigger users displayed at a position corresponding to the view control after receiving the selection operation for the target view option.

In an optional embodiment, the method further includes:
saving the first comment information associated with the target view option and a piece of identification information of target multimedia content commented on by the first comment information under a target tag in an associated manner, after receiving the selection operation for the target view option, where the information under the target tag is configured to allow users to perform a follow-up visit.

In an optional embodiment, the method further includes:
displaying an information follow-up visit interface in response to a second trigger operation, where respective tags are displayed on the information follow-up visit interface;
and displaying respective pieces of follow-up visit information under the target tag in response to a trigger operation for the target tag, where the pieces of follow-up visit information include the first comment information and the identification information of the target multimedia content, and the identification information of the target multimedia content is configured to open the target multimedia content after being triggered.

In an optional embodiment, the displaying the respective pieces of follow-up visit information under the target tag includes:
displaying respective sub-tags under the target tag, where the sub-tags include a comment sub-tag;
displaying view option tags representing respective view options in response to a trigger operation for the comment sub-tag;
and displaying respective pieces of comment information under any view option tag and identification information of multimedia content corresponding to the respective pieces of comment information, in response to a trigger operation for the any view option tag.

In an optional embodiment, the method further includes:
generating a piece of interaction information corresponding to the first comment information after receiving the selection operation for the target view option, where the interaction information is configured to indicate that an opinion is expressed on the first comment information;
and sending the interaction information to a poster of the first comment information.

In an optional embodiment, the displaying at least one piece of comment information corresponding to the target multimedia content includes:
displaying the at least one piece of comment information and view guidance information in response to a comment viewing operation for the target multimedia content, where the view guidance information is configured to guide a first user to express an opinion on the at least one piece of comment information.

In a second aspect, the embodiments of the present disclosure further provide an interaction apparatus, including:
a first display module configured to display at least one piece of comment information corresponding to the target multimedia content;
a second display module configured to display a plurality of view options for expressing opinions on a piece of first comment information, in response to a first trigger operation for the first comment information among the at least one piece of comment information;
and a third display module configured to update and display a view result corresponding to the first comment information at a target display position corresponding to the first comment information, in response to a selection operation for a target view option among the plurality of view options.

**In** a third aspect, the embodiments of the present disclosure further provide a computer device, including a processor, a memory, and a bus; the memory stores machine-readable instructions executable by the processor, and when the computer device is in operation, the processor communicates with the memory via the bus; and the machine-readable instructions are executed by the processor to perform the first aspect, or the steps in any optional embodiment of the first aspect.

In a fourth aspect, the embodiments of the present disclosure further provide a computer-readable storage medium, a computer program is stored on the computer-readable storage medium, and the computer program, when executed by a processor, performs the first aspect, or the steps in any optional embodiment of the first aspect.

### BRIEF DESCRIPTION OF DRAWINGS

In order to more clearly explain the technical solutions of the embodiments of the present disclosure, the drawings necessary for use in the embodiments will be briefly described below, and the drawings herein are incorporated into and constitute a part of the present specification, and these drawings illustrate embodiments in accordance with the present disclosure, and together with the specification, are used to explain the technical solutions of the present disclosure. It should be understood that the following drawings illustrate only some embodiments of the present disclosure, and therefore should not be regarded as limiting the scope, and other related drawings can be obtained from these drawings without creative effort to those skilled in the art.
Fig. 1 is a flowchart of an interaction method provided by the embodiments of the present disclosure;
Fig. 2 is a schematic diagram illustrating an effect of a display interface of a target multimedia content provided by the embodiments of the present disclosure;
Fig. 3 is a schematic diagram illustrating an effect of a display interface of another target multimedia content provided by the embodiments of the present disclosure;
Fig. 4 is a schematic diagram illustrating an effect of displaying a piece of view guidance information provided by the embodiments of the present disclosure;
Fig. 5 is a schematic diagram illustrating an effect of displaying view options provided by the embodiments of the present disclosure;
Fig. 6 is a schematic diagram illustrating another effect of displaying view options provided by the embodiments of the present disclosure;
Fig. 7 is a schematic diagram illustrating an effect of updating and displaying a second view result provided by the embodiments of the present disclosure;
Fig. 8 is another schematic diagram illustrating an effect of updating and displaying a second view result provided by the embodiments of the present disclosure;
Fig. 9 is yet another schematic diagram illustrating an effect of updating and displaying a second view result provided by the embodiments of the present disclosure;
Fig. 10 is a schematic diagram illustrating an effect of an information follow-up visit interface provided by the embodiments of the present disclosure;
Fig. 11 is a schematic diagram illustrating an effect of another information follow-up visit interface provided by the embodiments of the present disclosure;
Fig. 12 is a schematic diagram illustrating an effect of an interaction method provided by the embodiments of the present disclosure;
Fig. 13 is a schematic diagram illustrating an effect of another interaction method provided by the embodiments of the present disclosure;
Fig. 14 is a schematic structural diagram of an interaction apparatus provided by the embodiments of the present disclosure; and
Fig. 15 shows a schematic diagram of a computer device provided by the embodiments of the present disclosure.

### DETAILED DESCRIPTION

In order to make the objectives, technical solutions, and advantages of the embodiments of the present disclosure clearer, the technical solutions in the embodiments of the present disclosure will be described clearly and completely below in conjunction with the drawings. Apparently, the described embodiments are just a part but not all of the embodiments of the present disclosure. The components of the embodiments of the present disclosure typically described and illustrated herein can be arranged and designed in a variety of different configurations. Therefore, the detailed description of the embodiments of the present disclosure provided below is not intended to limit the scope of the present disclosure as claimed, but merely represents selected embodiments of the present disclosure. All other embodiments obtained by those skilled in the art without any creative effort based on the embodiments of the present disclosure fall within the scope of the present disclosure.

During the process of browsing multimedia content, users can express various comment information about the multimedia content. When browsing the multimedia content, users can gain further insights by viewing the comment information made by other users. Sometimes, users may have some insights after reading certain comment information. In this case, they may express their further opinions of the comment information by replying to the comment information. However, on the one hand, this operation mode is time-consuming and cannot meet the needs of users to express their attitude towards this piece of comment information in a timely and quick manner; on the other hand, if users want to know the attitude of other users towards a certain piece of comment information, they also need to understand it by reading reply messages, which greatly reduces the efficiency of obtaining effective information.

Based on this, the embodiments of the present disclosure provide an interaction method, which can display a plurality of view options for expressing opinions on a piece of first comment information after receiving a first trigger operation of a user on the first comment information corresponding to the target multimedia content, and after the user selects a target view option, a view result corresponding to the first comment information can be updated and displayed at a target display position corresponding to the first comment information. By displaying the plurality of view options for the comment information, the interaction method allows users to express their attitude towards the comment information in a timely and quick manner by selecting the view options in their intentions; in addition, users can quickly grasp the attitude of other users towards the comment information by viewing the corresponding view results of the comment information, which can greatly improve the efficiency of obtaining effective information compared with reading comments on reply messages.

The defects of the above-mentioned solution and the proposed solutions are the result of the inventor's practice and careful study, and therefore, the process of discovering the above-mentioned problem and the solution proposed in the present disclosure below to address the above-mentioned problem should be the inventor's contribution to the present disclosure in the course of the present disclosure.

It should be noted that similar reference numerals and letters denote similar items in the following drawings, and therefore, once an item is defined in a figure, it does not need to be further defined or explained in the subsequent figures.

It may be understood that before using the technical solutions disclosed in the embodiments of the present disclosure, it is necessary to inform user(s) the types, using scope, and using scenarios of personal information involved in the present disclosure according to relevant laws and regulations in an appropriate manner and obtain the authorization of the user(s).

In order to facilitate the understanding of the present disclosure, first, an interaction method disclosed in the embodiments of the present disclosure will be described in detail, and the execution body of the interaction method provided in the embodiment of the present disclosure is generally a computer device having a certain computing power.

Hereinafter, the interaction method provided by the embodiments of the present disclosure will be described by taking execution body as a terminal device as an example.

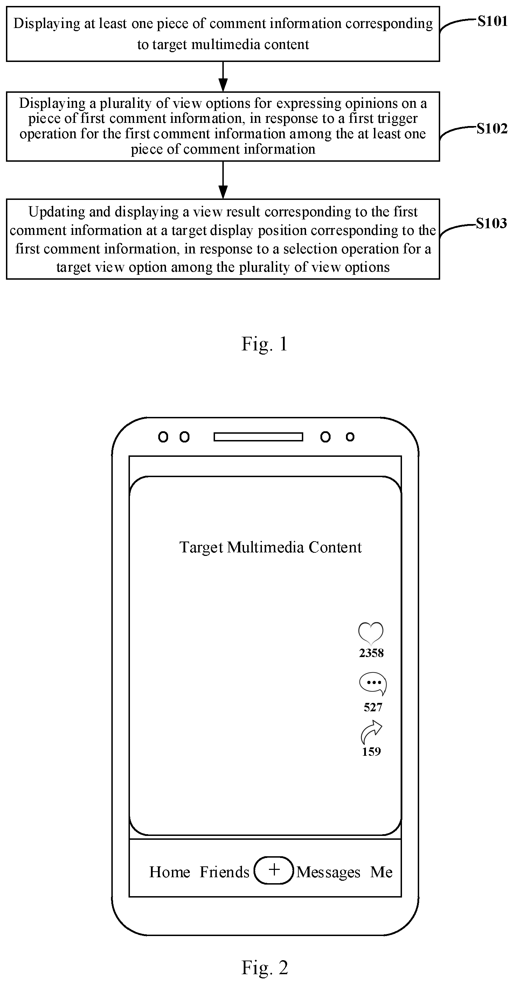

Fig. 1 is a flowchart of an interaction method provided by the embodiments of the present disclosure, and the method includes the followings steps S101 to S103 as shown below.

S101: displaying at least one piece of comment information corresponding to target multimedia content.

S102: displaying a plurality of view options for expressing opinions on a piece of first comment information, in response to a first trigger operation for the first comment information among the at least one piece of comment information.

S103: updating and displaying a view result corresponding to the first comment information at a target display position corresponding to the first comment information, in response to a selection operation for a target view option among the plurality of view options.

In the embodiments of the present disclosure, as an example, at least one piece of comment information may be displayed in the same target interface as the target multimedia content. Displaying at least one piece of comment information corresponding to the target multimedia content may include displaying the at least one piece of comment information corresponding to the target multimedia content on the target interface in response to a comment information viewing operation (triggering a comment control, or comment information button) triggered on a display interface of the target multimedia content.

Fig. 2 is the display interface of the target multimedia content, and the right side of the display interface contains a comment information button (such as a message button in Fig. 2). The operation of triggering the comment information button may include clicking, sliding, touch-and-hold, voice and other operations, and there is no specific limitation here. After detecting a trigger operation for the comment information button, a comment display interface or a comment display window may be displayed. In the comment display interface or comment display window, the at least one piece of comment information corresponding to the target multimedia content may be displayed.

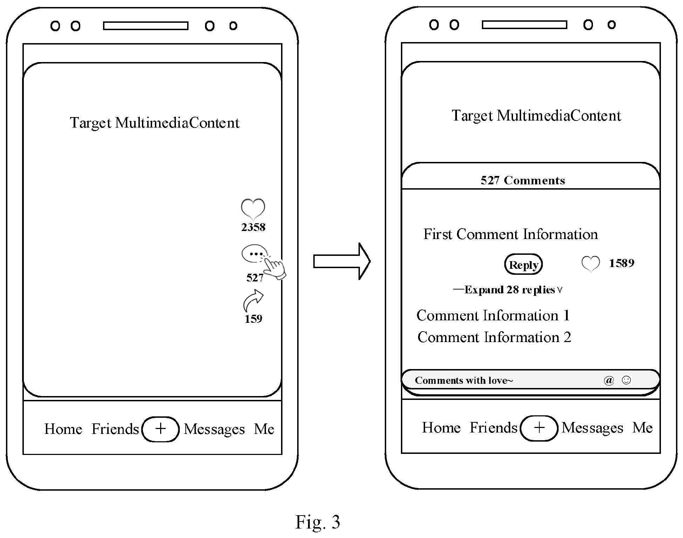

As shown in Fig. 3, after triggering the comment information button on the display interface of the target multimedia content, the target multimedia content and at least one piece of comment information corresponding to the target multimedia content, including a piece of first comment information, are displayed on the target interface. Reply messages for each piece of comment information may be displayed under the comment information. These reply messages can be hidden and displayed after a viewing operation on the reply messages is detected (triggering "Expand * replies").

In a specific implementation, it may be determined whether the first user (that is, the user currently performing interactive operation) is a novice user of the new function proposed in the embodiments of the present disclosure, for example, whether the first user has not used the view option, or whether the number of times of pop-up guidance of the new function is less than a preset number of times, and the like. In the case where the first user is not a new user, it may be considered that the first user has known how to express his opinion on comment information, and in this case, the terminal device may automatically execute the steps of S102 to S103 after displaying the at least one piece of comment information corresponding to the target multimedia content.

In the case where the first user is a new user, it may be considered that the first user does not know how to express his opinion on comment information. In this case, the new function guidance information may be displayed to guide the first user to express his opinion on at least one piece of comment information. In an embodiment, displaying the at least one piece of comment information corresponding to the target multimedia content may include: displaying the at least one piece of comment information and view guidance information in response to a comment viewing operation for the target multimedia content, where the view guidance information is configured to guide the first user to express an opinion on the at least one piece of comment information.

In this embodiment, the method of displaying the at least one piece of comment information may be described above with reference to the above description, and will not be repeated here. The view guidance information may be displayed in any possible form such as pop-up window or bubbles. The view guidance information may include step information for expressing opinions on the comment information, and the first user may complete the expressing opinions on the comment information according to the step information.

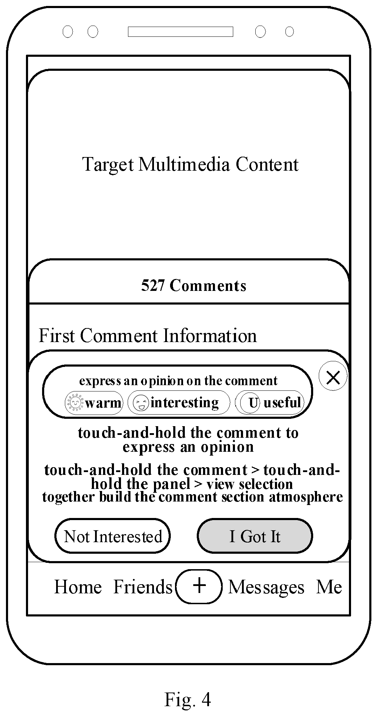

As shown in Fig. 4, the view guidance information in the form of pop-up window is shown. The view guidance information may include step information for expressing opinions on the comment information, and view options for expressing opinions on the comment information. The step information can be configured to guide the first user to touch-and-hold the comment information on which he wants to express his opinion. After an interaction panel is displayed, the first user can touch-and-hold the view options on the interaction panel, such as "warm", "interesting", "useful" and other view options, to express his opinion on the comment information. Feedback options of "Not Interested" and "I Got It" may also be displayed at the bottom of the pop-up window. If the first user triggers the feedback option of "Not Interested", the pop-up window is closed and the target interface is continued to be displayed. If the first user triggers the feedback option of "I Got It", the pop-up window may be closed and the interaction panel may be displayed.

Considering that when the first user has known the step of expressing his opinion on the comment information through the above-mentioned view guidance information, the view guidance information loses the significance of guiding the first user to express his opinion. If the view guidance information is continuously displayed to the first user, it may bring certain troubles to the first user and increase the burden of display resources. Therefore, the view guidance information may be displayed only for novice users, specifically, it may be displayed before the first user has expressed opinions on the comment, or it may not be displayed after it is displayed to the first user for a preset number of times, or it may be displayed to novice users in other ways, and there is no specific limitation here.

The first comment information may include any comment information among the at least one piece of comment information. In an embodiment, the first trigger operation may include a target trigger operation acting on the first comment information (Mode 1); or the first trigger operation may include a trigger operation acting on a view control associated with the first comment information (Mode 2).

In the case where the first trigger operation is different, the specific embodiment of displaying a plurality of view options for expressing opinions on the first comment information is also different. Hereinafter, specific embodiments of displaying a plurality of view options will be described with respect to the above-mentioned first trigger operation.

With respect to Mode 1, in the case where the first trigger operation includes a target trigger operation acting on the first comment information, S102 may specifically include: displaying a plurality of view options for expressing opinions on the first comment information in response to the target trigger operation acting on the first comment information.

In an embodiment, the target trigger operation acting on the first comment information may include a click operation, a touch-and-hold operation, etc., acting on the comment information, and may not be specifically limited here. In the case where the target trigger operation includes a touch-and-hold operation, the touch-and-hold operation may refer to an operation in which a trigger duration exceeds a preset duration.

In a further embodiment, in response to the target trigger operation acting on the first comment information, an interaction panel may be displayed in which a plurality of view options may be displayed.

Here, each view option may display a view identifier and a piece of option information corresponding to the view option, and a total number of users selecting the view option.

A view identifier may be configured to identify a view option, and the view identifier may also be associated with semantics identifying the view option. Exemplarily, the view identifier may include an emoji or the like. For example, the view identifier indicating that the comment information makes people feel warm psychologically may be set to the emoji of "sun"; the view identifier indicating that the comment information is interesting may be set to the emoji of "laughing"; and the view identifier indicating that the comment information is useful may be set to the emoji of "useful" (denoted as ○,U in the figure, similarly hereinafter, will not be repeated).

The option information may include the option content of the view option. The option information corresponding to each view identifier may be configured to interpret the view identifier. For example, the option information corresponding to the view identifier of "sun" may be "warm", which is configured to explain that the meaning of the view identifier is that the comment information makes the user feel warm psychologically; the option information corresponding to the view identifier of "laughing" may be "interesting", which is configured to explain that the meaning of the view identifier is that the comment information makes the user feel that the comment information is interesting; and the option information corresponding to the view identifier of "useful" may be "useful", which is configured to explain that the meaning of the view identifier is that the comment information makes the user feel that the comment information is useful.

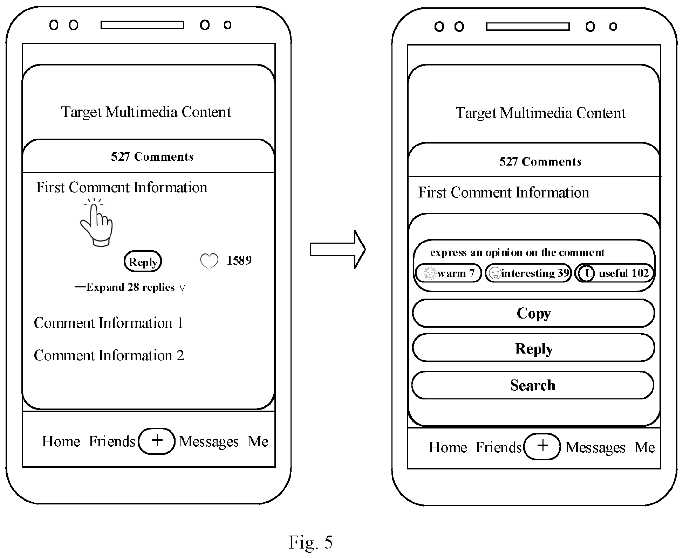

Fig. 5 shows a schematic diagram of an effect of displaying view options. Taking the case that the target multimedia content and pieces of comment information corresponding to the target multimedia content are displayed on the display interface of the target multimedia content as an example, an interaction panel is displayed after the first user touches-and-holds the first comment information. A plurality of view options may be displayed on the interaction panel, that is, the plurality of view options include a view option 1 for indicating the comment information of "warm", a view option 2 for indicating the comment information of "interesting", and a view option 3 for indicating the comment information of "useful". The view option 1 may include the view identifier of "sun", the option information of "warm", and the number of users "7" selecting the view option. The view option 2 may include the view identifier of "laughing", the option information of "interesting", and the number of users "39" selecting the view option. The view option 3 may include the view identifier of "useful", the option information of "useful", and the number of users "102" selecting the view option.

After receiving the selection operation for the target view option, the number of users corresponding to the target view option may be updated.

With respect to Mode 2, the first trigger operation may include a trigger operation acting on a view control associated with the first comment information. S102 may specifically include: displaying a plurality of view options for expressing opinions on the first comment information in response to the trigger operation acting on the view control associated with the first comment information.

In an embodiment, the trigger operation acting on the view control associated with the first comment information may include a click operation, a touch-and-hold operation, etc., acting on the view control associated with the first comment information, and there is no specific limitation here. The view control may include a like button.

In a further embodiment, in response to the trigger operation acting on the view control associated with the first comment information, a plurality of view options are displayed at a preset display position corresponding to the view control.

Here, each view option may include a view identifier corresponding to the view option. The description of the view identifier may refer to the foregoing, and will not be repeated here.

The selection operation for the target view option among the plurality of view options may include any feasible operation such as a click operation, a touch-and-hold operation, etc., for the target view option.

After detecting the selection operation for the target view option, the updated and displayed view result may include at least a result of selecting the target view option by the first user.

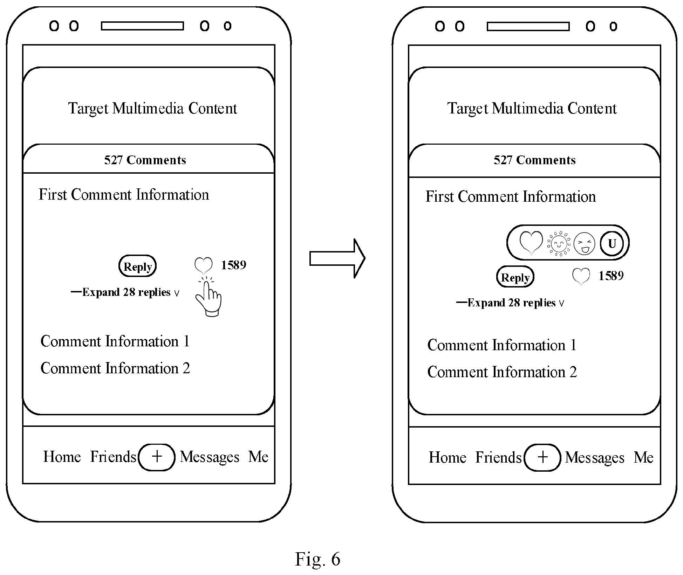

Fig. 6 shows a schematic diagram of another effect of displaying view options. Taking the case that the target multimedia content and pieces of comment information corresponding to the target multimedia content are displayed on the display interface of the target multimedia content as an example, the comment information corresponding to target multimedia content is associated with a like button, and the number of triggered users "1589" is displayed in the lower right corner of the like button. The trigger operation of the first user on the like button can display a plurality of view options at the preset display position corresponding to the like button, that is, the view option 1 for indicating that the comment information is "warm", the view option 2 for indicating that the comment information is "interesting", and the view option 3 for indicating that the comment information is "useful". Among them, the view option 1 may include the view identifier of "sun"; the view option 2 may include the view identifier of "laughing"; and the view option 3 may include the view identifier of "useful".

After receiving the selection operation for the target view option, the number of triggered users displayed at the position corresponding to the view control may also be updated. Taking the case that the view control is a like button as an example, after triggering any one of the plurality of view options associated with the like button, the number of likes will be increased by 1. Here, the plurality of view options in the embodiments of the present disclosure are positive view signals (that is, expressing a positive attitude of the user towards the comment information), and therefore, when the user triggers any one of the plurality of view options, it may be considered that the user likes the comment information.

In an embodiment, the view result includes a first view result, and the first view result may indicate that the first user selects a target view option. The first view result may include only a result of selecting the target view option by the first user. Here, in the case where only the first user selects the target view option, the first view result may be displayed.

In an embodiment, the view result includes a second view result, and the second view result may indicate that the first user and the second users jointly select the target view option, and indicate the number of the second users. The second user refers to a user other than the first user. Here, in the case where the first user selects the target view option and the second user also selects the target view option, the second view result may be displayed.

In response to there being no historical view result matching the target view option in the first comment information before the first user selects the target view option, the first view result is displayed.

There is no historical view result matching the target view option in the first comment information, that is, no opinion is expressed on the first comment information before the first user selects the target view option, or the view option previously on which an opinion is expressed is not the target view option, so the first view result can be displayed.

In response to there being a historical view result matching the target view option in the first comment information before the first user selects the target view option, the second view result is displayed.

There is a historical view result matching the target view option in the first comment information, that is, an opinion is expressed on the first comment information before the first user selects the target view option, and the view option previously on which an opinion is expressed in the first comment information includes the target view option.

The historical view result may or may not be displayed.

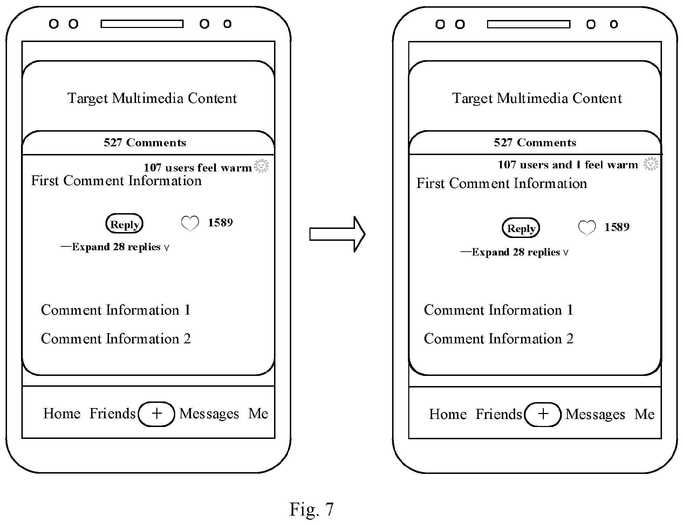

In response to that the number of second users selecting the target view option indicated in the historical view result is greater than or equal to a set threshold (e.g., 100 users), the historical view result may be displayed. As an example, the target view option is "warm", and the number of second users selecting "warm" is 107, then the historical view result of "107 users feel warm" may be displayed. After the first user selects "warm", the updated and displayed second view result may be "107 users and I feel warm", as shown in Fig. 7.

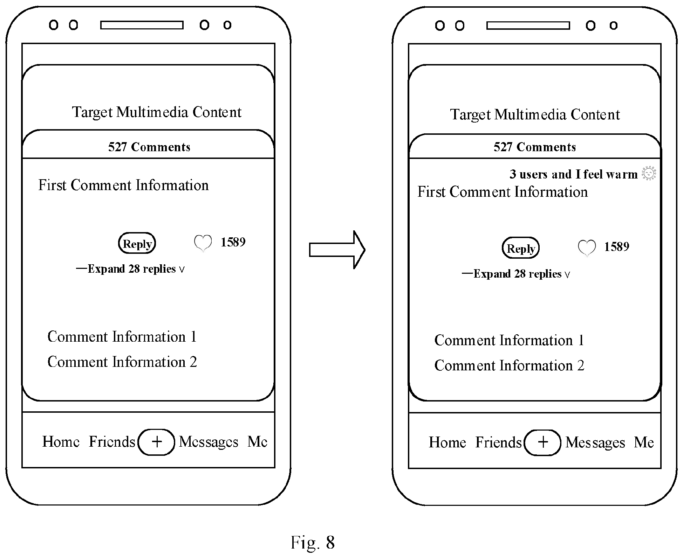

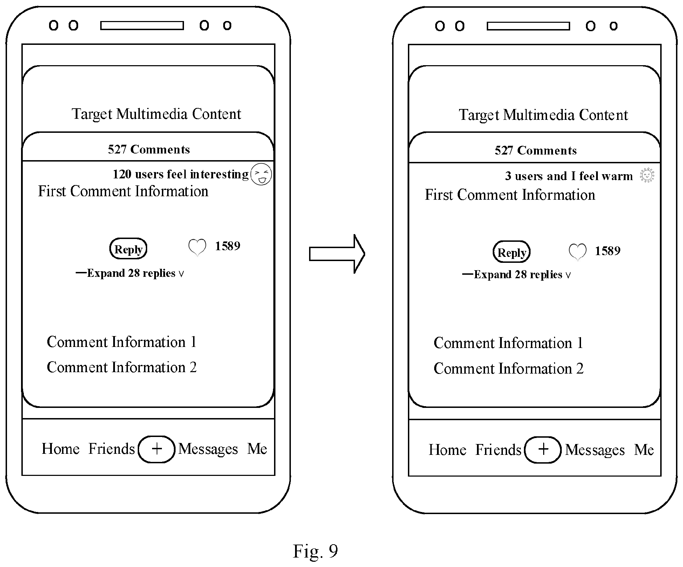

In response to that the number of second users selecting the target view option displayed in the historical view result is less than a set threshold (for example, 100 users), the historical view result may not be displayed (in response to that the number of third users selecting the other view option is greater than or equal to the set threshold, the selected other view option and the number of third users may be displayed; and in response to that the number of users selecting any view option is less than the set threshold, the view result may not be displayed). As an example, the target view option is "warm", the number of second users selecting "warm" is 3, and the number of users selecting any view option is less than 100, then the historical view result is not displayed. After the first user selects "warm", the updated and displayed second view result may be "Three users and I feel warm", as shown in Fig. 8. In yet another example, the target view option is "warm", the number of second users selecting "warm" is 3, and the number of third users selecting "interesting" is 120, then the historical view result of "120 users feel interesting" may be displayed. After the first user selects "warm", the updated and displayed second view result may be "Three users and I feel warm", as shown in Fig. 9.

The historical view result may be displayed when at least one piece of comment information corresponding to the target multimedia content is displayed. In an embodiment, displaying at least one piece of comment information corresponding to the target multimedia content includes: displaying, in response to there being a piece of second comment information among the at least one piece of comment information that satisfies a view result display condition, a historical view result corresponding to the second comment information at a target display position corresponding to the second comment information.

Here, the view result display condition may include that the number of users selecting the view option is greater than a set threshold. That is, in response to that an opinion is expressed on the comment information, and the number of users selecting the view option is greater than the set threshold, the historical view result corresponding to the comment information may be displayed.

Here, the first comment information may or may not be included in the second comment information. As an example, the historical view result may be displayed at the upper right corner of the second comment information.

In the above-mentioned interaction method according to the embodiments of the present disclosure, a plurality of view options for expressing opinions on the first comment information may be displayed after receiving the first trigger operation of the user on the first comment information corresponding to the target multimedia content, and after the user selects the target view option, the view result corresponding to the first comment information may be updated and displayed at the target display position corresponding to the first comment information. The above-mentioned process can realize the user to timely and quickly express his attitude towards the comment information by selecting the view option in the intention, and quickly grasp the attitude of other users towards the comment information. In addition, after the first user expresses his opinion on the first comment information, the first comment information may be saved to realize the first user's follow-up visit to the first comment information.

In an embodiment, after receiving the selection operation for the target view option, the first comment information associated with the target view option and a piece of identification information of target multimedia content commented on by the first comment information may be associated and saved under a target tag. The information under the target tag is configured to allow users to perform a follow-up visit.

In the above-mentioned embodiment, the first comment information associated with the target view option and the identification information of target multimedia content commented on by the first comment information may be automatically associated and saved under the target tag. The target tag may include, for example, at least one tag among tags such as like and favorite.

When the first user wants to perform a follow-up visit on the saved information, the first user can perform a follow-up visit on respective pieces of information under the corresponding tag. During the process of implementation, an information follow-up visit interface may be displayed in response to a second trigger operation; respective tags are displayed on the information follow-up visit interface; respective pieces of follow-up visit information under the target tag may be displayed in response to a trigger operation for the target tag; and the pieces of follow-up visit information include the first comment information and the identification information of the target multimedia content, and the identification information of the target multimedia content is configured to open the target multimedia content after being triggered.

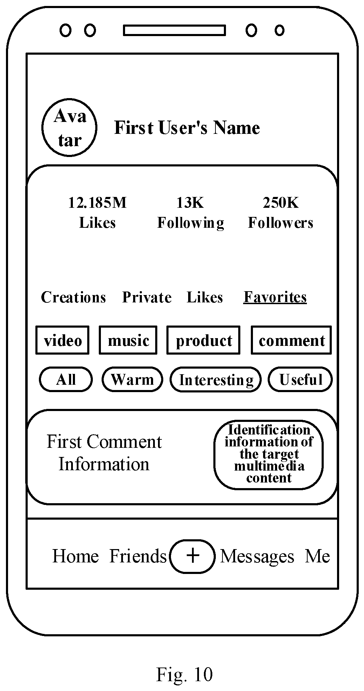

The information follow-up visit interface may be a personal interface of the first user. In response to opening the personal interface, the information follow-up visit interface may be displayed, as shown in Fig. 10, and respective tags displayed on the information follow-up visit interface may include, for example, favorites, likes, private, creations, etc. After the first user triggers any tag, the information under any tag may be followed up.

In order to make the first user perform a follow-up visit on the comment information more quickly, in an embodiment, displaying the respective pieces of follow-up visit information under the target tag may include: displaying respective sub-tags under the target tag, where the sub-tags include a comment sub-tag; displaying view option tags representing respective view options in response to a trigger operation for the comment sub-tag; and displaying respective pieces of comment information under any view option tag and identification information of multimedia content corresponding to the respective pieces of comment information, in response to a trigger operation for the any view option tag.

As shown in Fig. 10, the respective sub-tags displayed under the target tag may include a comment sub-tag, and may also include a video sub-tag, a music sub-tag, a product sub-tag, and the like. Corresponding information may be stored under each sub-tag.

The view option tags representing the respective view options may be displayed under the comment sub-tag. According to the view option tag, the first user can perform a follow-up visit on the respective pieces of comment information under the respective view option tags and the identification information of multimedia content corresponding to the respective pieces of comment information.

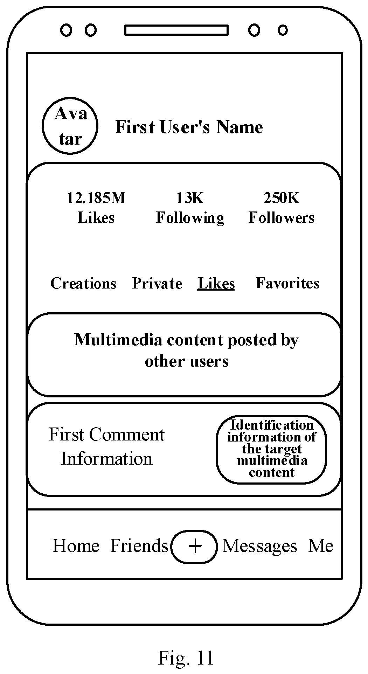

Fig. 11 is a schematic diagram illustrating an effect of another information follow-up visit interface. After the first user triggers the target tag of "like", respective pieces of information stored under the target tag, such as multimedia content posted by other users, the first comment information expressed by the first user, and the like, may be displayed.

In other embodiments, a comment sub-tag, a video sub-tag, a music sub-tag, a product sub-tag, and the like may also be displayed under the target tag of "like". Corresponding information may be stored under each sub-tag. The specific display method may be similar to that of Fig. 10, and will not be repeated here.

In order to increase the interaction between users, in an embodiment, after receiving the selection operation for the target view option, a piece of interaction information corresponding to the first comment information may be generated; the interaction information is configured to indicate that an opinion is expressed on the first comment information; and the interaction information is then sent to a poster of the first comment information.

By sending the interaction information to the poster of the first comment information, the poster can know that the first comment information posted by the poster has been expressed by the first user, and the poster can further reply to the view of the first user, thereby increasing the interaction between the poster and the first user.

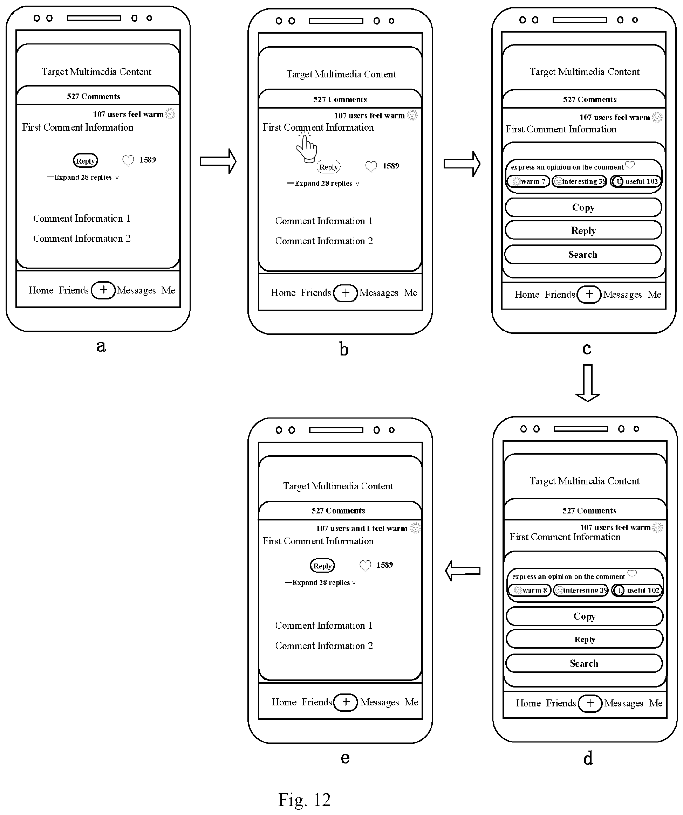

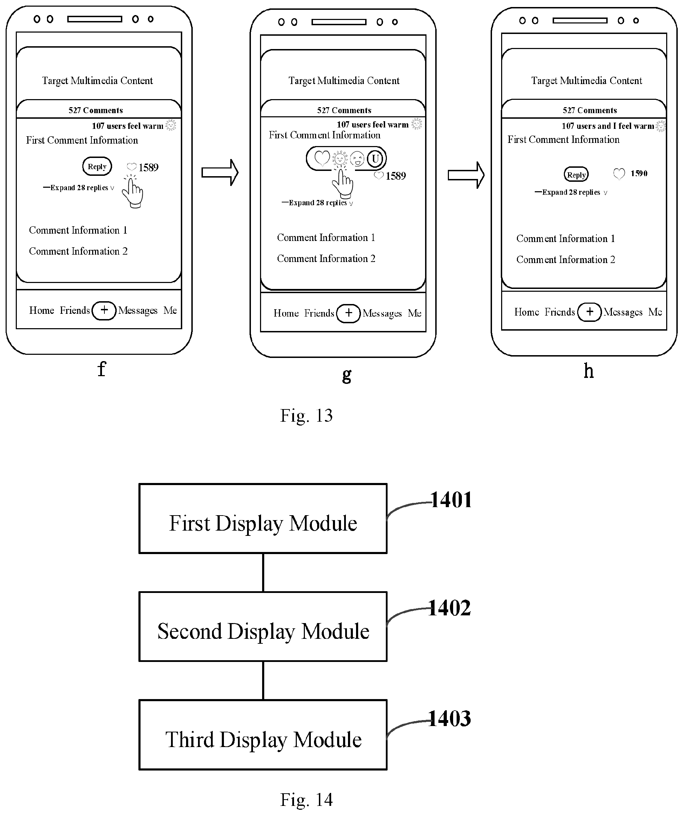

In order to facilitate understanding of the interaction method provided by the embodiments of the present disclosure, the above-mentioned interaction method will be described in detail below with reference to Fig. 12 and Fig. 13.

Fig. 12 is a schematic diagram illustrating an effect of an interaction method. Fig. 12 includes Fig. a to Fig. e, and the target multimedia content are displayed on a display interface of the target multimedia content in Fig. a. A plurality pieces of comment information are displayed below the target multimedia content, including the first comment information and other comment information (comment information 1 and comment information 2). A like button and the number of users who have liked the first comment information, 1589, are displayed on the lower right corner of the first comment information. The historical view result, "107 users feel warm", is displayed on the upper right corner of the first comment information. After the first user touches-and-holds the first comment information, an interaction panel may be displayed, and the interaction panel displays a view option 1 for indicating that the comment information is "warm", a view option 2 for indicating that the comment information is "interesting", and a view option 3 for indicating that the comment information is "useful". The view option 1 includes the view identifier of "sun", the option information of "warm", and the number of users "7" selecting the view option; the view option 2 includes the view identifier of "laughing", the option information of "interesting", and the number of users "39" selecting the view option; and the view option 3 includes the view identifier of "useful", the option information of "useful", and the number of users "102" selecting the view option, as shown in Fig. c. After the first user selects the view option of "warm", the number of users selecting the view option is updated from "7" to "8", as shown in Fig. d. After swiping down, the interaction panel may be hidden and a media content display interface is continued to be displayed. In this case, the historical view result of the first comment information on the media content display interface is updated to "107 users and I feel warm", as shown in Fig. e.

When the first user wants to cancel the above-mentioned view, the first user can touches-and-holds the first comment information again, and after displaying the interaction panel, the first user can click the view option of "warm" again to cancel the view to the first comment information. The view result is updated from "107 users and I feel warm" in Fig. e to "107 users feel warm" in Fig. a.

Fig. 13 is a schematic diagram illustrating an effect of another interaction method. Fig. 13 includes Fig. f to Fig. h. The target multimedia content is displayed on the display interface of the target multimedia content in Fig. f. A plurality pieces of comment information are displayed below the target multimedia content, including the first comment information and other comment information (comment information 1 and comment information 2). A like button and the number of users who have liked the first comment information, 1589, are displayed on the lower right corner of the first comment information. The historical view result, "107 users feel warm", is displayed on the upper right corner of the first comment information. After the first user touches-and-holds the like button, a view option 1 for indicating that the comment information is "warm", a view option 2 for indicating that the comment information is "interesting", and a view option 3 for indicating that the comment information is "useful" are displayed. For example, the view option 1 includes the view identifier of "sun"; the view option 2 includes the view identifier of "laughing"; and the view option 3 includes the view identifier of "useful", as shown in Fig. g. After the first user selects the view option of "warm", the historical view result of the first comment information on the media content display interface is updated to "107 users and I feel warm", and the number of users who like the first comment information is updated from "1589" to "1590", as shown in Fig. h.

When the first user wants to cancel the above-mentioned view, the first user may click on the view result of "107 users and I feel warm" and a pop-up window of "Cancel the view" is displayed. After the first user triggers "cancel the view", the view result is updated from "107 users and I feel warm" in Fig. h to "107 users feel warm" in Fig. f.

Those skilled in the art will understand that in the above-mentioned method of the detailed embodiment, the order in which the steps are written does not mean a strict order of execution and constitutes any limitation on the implementation process, and the specific order of execution of the steps should be determined by its function and possible internal logic.

Based on the same inventive concept, the embodiments of the present disclosure further provide an interaction apparatus corresponding to the interaction method. Because the principle of solving problems by the apparatus in the embodiments of the present disclosure is similar to the above-mentioned interaction method in the embodiments of the present disclosure, the implementation of the apparatus can refer to the implementation of the method, and redundancy will not be repeated.

Fig. 14 is a schematic structural diagram of an interaction apparatus provided by the embodiments of the present disclosure, and the interaction apparatus includes the following modules.

A first display module 1401 is configured to display at least one piece of comment information corresponding to the target multimedia content.

A second display module 1402 is configured to display a plurality of view options for expressing opinions on a piece of first comment information, in response to a first trigger operation for the first comment information among the at least one piece of comment information.

A third display module 1403 is configured to update and display a view result corresponding to the first comment information at a target display position corresponding to the first comment information, in response to a selection operation for a target view option among the plurality of view options.

In an optional embodiment, the view result includes a first view result, and the first view result indicates that a first user selects the target view option;
or the view result includes a second view result indicating that the first user and second users jointly select the target view option, and indicating the number of the second users.

In an optional embodiment, the third display module 1403 is configured to: display the first view result in response to there being no historical view result matching the target view option in the first comment information before the first user selects the target view option;
or display the second view result in response to there being a historical view result matching the target view option in the first comment information before the first user selects the target view option.

In an optional embodiment, the first display module 1401 is configured to display, in response to there being a piece of second comment information among the at least one piece of comment information that satisfies a view result display condition, a historical view result corresponding to the second comment information at a target display position corresponding to the second comment information.

In an optional embodiment, the first trigger operation includes a target trigger operation acting on the first comment information;
or the first trigger operation includes a trigger operation acting on a view control associated with the first comment information.

In an optional embodiment, the view control includes a like button.

In an optional embodiment, the target trigger operation includes a touch-and-hold operation, and the touch-and-hold operation refers to an operation in which a trigger duration exceeds a preset duration.

In an optional embodiment, the second display module 1402 is configured to:
display an interaction panel in which the plurality of view options are displayed, in response to the target trigger operation acting on the first comment information.

In an optional embodiment, each view option on the interaction panel includes a view identifier and a piece of option information corresponding to the view option, and the number of users selecting the view option.

In an optional embodiment, the second display module 1402 is configured to:
display, in response to a trigger operation acting on a view control associated with the first comment information, the plurality of view options at a preset display position corresponding to the view control.

In an optional embodiment, each view option displayed at the preset display position corresponding to the view control includes a view identifier corresponding to the view option.

In an optional embodiment, the apparatus further includes:
an updating module which is configured to update the number of trigger users displayed at a position corresponding to the view control after receiving the selection operation for the target view option.

In an optional embodiment, the apparatus further includes:
a saving module which is configured to save the first comment information associated with the target view option and a piece of identification information of target multimedia content commented on by the first comment information under a target tag in an associated manner, after receiving the selection operation for the target view option; and the information under the target tag is configured to allow users to perform a follow-up visit.

In an optional embodiment, the apparatus further includes:
a fourth display module which is configured to display an information follow-up visit interface in response to a second trigger operation, where respective tags are displayed on the information follow-up visit interface;
and a fifth display module which is configured to display respective pieces of follow-up visit information under the target tag in response to a trigger operation for the target tag, where the pieces of follow-up visit information include the first comment information and the identification information of the target multimedia content, and the identification information of the target multimedia content is configured to open the target multimedia content after being triggered.

In an optional embodiment, the fourth display module is configured to:
display respective sub-tags under the target tag, where the sub-tags include a comment sub-tag;
display view option tags representing respective view options in response to a trigger operation for the comment sub-tag;
and display respective pieces of comment information under any view option tag and identification information of multimedia content corresponding to the respective pieces of comment information, in response to a trigger operation for the any view option tag.

**In** an optional embodiment, the apparatus further includes:
a generation module which is configured to: generate a piece of interaction information corresponding to the first comment information after receiving the selection operation for the target view option, where the interaction information is configured to indicate that an opinion is expressed on the first comment information;
and send the interaction information to a poster of the first comment information.

In an optional embodiment, the first display module 1401 is configured to:
display the at least one piece of comment information and view guidance information in response to a comment viewing operation for the target multimedia content, where the view guidance information is configured to guide the first user to express an opinion on the at least one piece of comment information.

The description of the processing flow of respective modules in the apparatus and the interaction flow between respective modules may refer to the related description in the above-mentioned method embodiment, and will not be described in detail here.

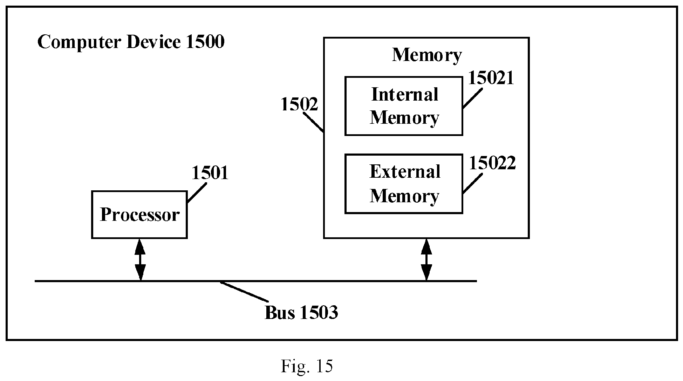

Based on the same technical concept, the embodiments of the present disclosure further provide a computer device. Referring to Fig. 15, a schematic structural diagram of a computer device 1500 provided by the embodiments of the present disclosure includes a processor 1501, a memory 1502, and a bus 1503. The memory 1502 is configured to store execution instructions, including a memory 15021 and an external memory 15022. The memory 15021 here is also called an internal memory, which is configured to temporarily store the operation data in the processor 1501 and the data exchanged with the external memory 15022 such as a hard disk. The processor 1501 exchanges data with the external memory 15022 through the internal memory 15021. When the computer device 1500 is running, the processor 1501 communicates with the memory 1502 through the bus 1503, so that the processor 1501 can execute instructions to implement the following steps:
displaying at least one piece of comment information corresponding to target multimedia content;
displaying a plurality of view options for expressing opinions on a piece of first comment information, in response to a first trigger operation for the first comment information among the at least one piece of comment information;
updating and displaying a view result corresponding to the first comment information at a target display position corresponding to the first comment information, in response to a selection operation for a target view option among the plurality of view options.

The embodiments of the present disclosure further provide a computer-readable storage medium, in which a computer program is stored on the computer-readable storage medium, and the computer program, when executed by a processor, performs the steps of the interaction method in the above-mentioned method embodiments. For example, the storage medium may be a volatile or non-volatile computer-readable storage medium.

The embodiments of the present disclosure further provide a computer program product, the computer program product carries program code, and instructions included in the program code can be configured to execute the steps of the interaction method described in the above-mentioned method embodiments. For details, refer to the above-mentioned method embodiments, and the description thereof is not repeated here.

For example, the above-mentioned computer program product may be implemented by hardware, software, or a combination thereof. In an optional embodiment, the computer program product is embodied as a computer storage medium, and in another optional embodiment, the computer program product is embodied as a software product, such as a Software Development Kit (SDK) or the like.

It may be clearly understood by those skilled in the art that, for the purpose of convenient and brief description, for a detailed working process of the foregoing system and apparatus, reference may be made to a corresponding process in the foregoing method embodiments, and details are not described again herein. In some embodiments provided by the present disclosure, it should be understood that the disclosed system, apparatus, and method may be implemented in other modes. For example, the apparatus embodiments as described above are only schematic, for example, the division of the units may be logical functional division; in actual implementation, there may be other division modes; for another example, a plurality of units or components may be combined or integrated into another system, or some features may be ignored or not executed. On the other hand, the displayed or discussed mutual coupling or direct coupling or communication connection may be implemented by using some communication interfaces. The indirect coupling or communication connection between the apparatuses or units may be implemented in electronic, mechanical, or other forms.

The above-mentioned units illustrated as separate components may be, or may not be physically separated, and the components displayed as units may be, or may not be, physical units, that is, they may be at one place, or may also be distributed to a plurality of network units; and some or all of the units may be selected according to actual needs to achieve the purpose of the solutions of the present embodiment.

In addition, the respective functional units in the respective embodiments of the present disclosure may be integrated in one processing unit, or each unit may physically exist separately, or two or more units may be integrated in one unit.

In the case where the functions are implemented in a form of software functional unit and sold or used as an independent product, the functions may be stored in a non-volatile computer-readable storage medium executable to the processor. Based on such understanding, the technical solutions of the present disclosure essentially, or part of the technical solutions may be implemented in a form of a software product. The computer software product is stored in a storage medium and includes several instructions so that a computer device (which may be a personal computer, a server, or a network device, etc.) to execute all or part of steps of the methods according to the respective embodiments of the present disclosure. The foregoing storage medium includes a USB flash disk, a removable hard disk, a Read-Only Memory (ROM), a Random-Access Memory (RAM), a magnetic disk or an optical disk, and various other media that can store program code.

Finally, it should be noted that the above-mentioned embodiments are only specific implementations of the present disclosure and configured to illustrate the technical solutions of the present disclosure, and are not intended to limit the present disclosure; and the protection scope of the present disclosure is not limited thereto; although the present disclosure has been described in detail with reference to the foregoing embodiments, those ordinarily skilled in the art should understand that within the technical scope disclosed in the present disclosure, any person of skill familiar with the technical field can still modify or conceive of changes to the technical solutions recorded in the foregoing embodiments, or make equivalent substitutions for some of the technical features therein; and these modifications, changes or substitutions do not cause the essence of the corresponding technical solutions to deviate from the spirit and scope of the technical solutions of the embodiments of the present disclosure, all of which shall be covered within the protection scope of the present disclosure. Therefore, the protection scope of the present disclosure shall be subject to the protection scope of the claims.

## Claims

1. An interaction method, at a first user side, comprising:
displaying at least one piece of comment information corresponding to target multimedia content;
displaying a plurality of view options for expressing opinions on a piece of first comment information, in response to a first trigger operation for the first comment information among the at least one piece of comment information; and
updating and displaying a view result corresponding to the first comment information at a target display position corresponding to the first comment information, in response to a selection operation for a target view option among the plurality of view options.

2. The method according to claim 1, wherein the view result comprises a first view result indicating that a first user selects the target view option; or
the view result comprises a second view result indicating that the first user and second users jointly select the target view option, and indicating a total number of the second users.

3. The method according to claim 2, wherein the updating and displaying the view result corresponding to the first comment information comprises:
displaying the first view result in response to there being no historical view result matching the target view option in the first comment information before the first user selects the target view option; or
displaying the second view result in response to there being a historical view result matching the target view option in the first comment information before the first user selects the target view option.

4. The method according to claim 1, wherein the displaying at least one piece of comment information corresponding to the target multimedia content comprises:
displaying, in response to there being a piece of second comment information among the at least one piece of comment information that satisfies a view result display condition, a historical view result corresponding to the second comment information at a target display position corresponding to the second comment information.

5. The method according to claim 1, wherein the first trigger operation comprises a target trigger operation acting on the first comment information; or
the first trigger operation comprises a trigger operation acting on a view control associated with the first comment information.

6. The method according to claim 5, wherein the view control comprises a like button.

7. The method according to claim 5, wherein the target trigger operation comprises a touch-and-hold operation, and the touch-and-hold operation refers to an operation in which a trigger duration exceeds a preset duration.

8. The method according to claim 5, wherein the displaying the plurality of view options for expressing opinions on the first comment information, in response to the first trigger operation for the first comment information among the at least one piece of comment information, comprises:
displaying an interaction panel in which the plurality of view options are displayed, in response to the target trigger operation acting on the first comment information.

9. The method according to claim 8, wherein each view option on the interaction panel comprises a view identifier and a piece of option information corresponding to the view option, and a total number of users selecting the view option.

10. The method according to claim 5 or 6, wherein the displaying the plurality of view options for expressing opinions on the first comment information, in response to the first trigger operation for the first comment information among the at least one piece of comment information, comprises:
displaying, in response to a trigger operation acting on a view control associated with the first comment information, the plurality of view options at a preset display position corresponding to the view control.

11. The method according to claim 10, wherein each view option displayed at the preset display position corresponding to the view control comprises a view identifier corresponding to the view option.

12. The method according to claim 5 or 6, further comprising:
updating a total number of trigger users displayed at a position corresponding to the view control after receiving the selection operation for the target view option.

13. The method according to claim 1, further comprising:
saving the first comment information associated with the target view option and a piece of identification information of target multimedia content commented on by the first comment information under a target tag in an associated manner, after receiving the selection operation for the target view option, wherein the information under the target tag is configured to allow users to perform a follow-up visit.

14. The method according to claim 13, further comprising:
displaying an information follow-up visit interface in response to a second trigger operation, wherein respective tags are displayed on the information follow-up visit interface; and
displaying respective pieces of follow-up visit information under the target tag in response to a trigger operation for the target tag, wherein the pieces of follow-up visit information comprise the first comment information and the identification information of the target multimedia content, and the identification information of the target multimedia content is configured to open the target multimedia content after being triggered.

15. The method according to claim 14, wherein the displaying the respective pieces of follow-up visit information under the target tag comprises:
displaying respective sub-tags under the target tag, wherein the sub-tags comprise a comment sub-tag;
displaying view option tags representing respective view options in response to a trigger operation for the comment sub-tag; and
displaying respective pieces of comment information under any view option tag and identification information of multimedia content corresponding to the respective pieces of comment information, in response to a trigger operation for the any view option tag.

16. The method according to claim 1, further comprising:
generating a piece of interaction information corresponding to the first comment information after receiving the selection operation for the target view option, wherein the interaction information is configured to indicate that an opinion is expressed on the first comment information; and
sending the interaction information to a poster of the first comment information.

17. The method according to claim 1, wherein the displaying at least one piece of comment information corresponding to the target multimedia content comprises:
displaying the at least one piece of comment information and view guidance information in response to a comment viewing operation for the target multimedia content, wherein the view guidance information is configured to guide a first user to express an opinion on the at least one piece of comment information.

18. An interaction apparatus, comprising:
a first display module, configured to display at least one piece of comment information corresponding to target multimedia content;
a second display module, configured to display a plurality of view options for expressing opinions on a piece of first comment information, in response to a first trigger operation for the first comment information among the at least one piece of comment information; and
a third display module, configured to update and display a view result corresponding to the first comment information at a target display position corresponding to the first comment information, in response to a selection operation for a target view option among the plurality of view options.

19. A computer device, comprising a processor, a memory, and a bus, wherein the memory stores machine-readable instructions executable by the processor; and when the computer device is in operation, the processor communicates with the memory via the bus, and the machine-readable instructions are executed by the processor to perform the interaction method according to any one of claims 1 to 17.

20. A computer-readable storage medium, storing a computer program, wherein the computer program, when executed by a processor, performs the interaction method according to any one of claims 1 to 17.
